# EUROPÄISCHE PATENTANMELDUNG

(11) **EP 2 072 818 A1**
(43) Veröffentlichungstag der Anmeldung: **24.06.2009**
(21) Anmeldenummer: 07025025.3
(22) Anmeldetag: 21.12.2007
(51) Int. Cl.: F04B 1/04, F16J 15/08

(54) **Metallische Flachdichtung und Ihre Verwendung**

(71) Anmelder: Reinz-Dichtungs-GmbH & Co. KG, 89233 Neu-Ulm (DE)
(72) Erfinder: Schneider, Juergen, Dr., 89188 Merklingen (DE); Unseld, Guenther, 89189 Neenstetten (DE); Achatz, Paul, 89077 Ulm (DE); Blersch, Robert, 88487 Baltringen (DE)
(74) Vertreter: Tomerius, Isabel

(57) **Zusammenfassung**

Die Erfindung betrifft eine metallische Flachdichtung mit einer ersten Ausnehmung für eine an einem Zylinderkopf befestigte Buchse, einer zweiten Ausnehmung für einen Ansaugkanal, mindestens einer dritten Ausnehmung für einen Hochdruckkanal sowie weiteren Öffnungen für Befestigungsmittel, wobei die Flachdichtung eine wellenförmige Profilierung aufweist, die die mindestens eine dritte Ausnehmung umgibt, eine Dichtsicke aufweist, die mindestens die erste Ausnehmung umgibt, und eine Dichtsicke aufweist, die zumindest die zweite Ausnehmung umgibt. Der von der wellenförmigen Profilierung umgebene Bereich und der von Dichtsicken umgebene Bereich überlappen sich nicht, und die Dichtsicken umschließen keine Öffnungen für Befestigungsmittel.

## Beschreibung

Die Erfindung betrifft eine metallische Flachdichtung, mit der mindestens drei Ausnehmungen, von denen mindestens eine einen Hochdruckbereich umschließt und die anderen beiden jeweils Bereiche mit geringerem Druck, so abgedichtet werden, dass zumindest der Hochdruck- und der Niederdruckbereich voneinander unabhängig auf der Basis unterschiedlicher geprägter Dichtelemente abgedichtet werden. Weiter betrifft die Erfindung die Verwendung dieser metallischen Flachdichtung zum Abdichten einer Pumpe gegen einen Zylinderkopf, eine Ansaugleitung und eine Hochdruckleitung. Am Zylinderkopf ist üblicherweise eine Buchse angebracht, die in Richtung der Pumpe bzw. in diese hinein ragt. Die Erfindung betrifft bevorzugt die Verwendung einer metallischen Flachdichtung zur Abdichtung einer Kraftstoffhochdruckpumpe insbesondere für einen gemeinsamen Hochdruckspeicher, das sogenannte Common Rail.

Der Hochdruckbereich weist dabei im Betrieb Drücke von über 130 MPa, bevorzugt von über 160 MPa auf, während der Niederdruckbereich Drücke von kleiner 1,5 MPa, bevorzugt kleiner 1 MPa aufweisen. Gleichzeitig sind die Außenkanten der Durchgangsöffnungen des Hochdruckbereichs und der Zylinderkopfbuchse, also des Niederdruckbereichs meist weniger als 15 mm voneinander entfernt.

Aus der DE 100 42 305 A1 ist eine Abdichtungsvorrichtung für einen Übergangsbereich an Hochdruckbauteilen bekannt. Die Abdichtungsvorrichtung besteht dabei aus zwei getrennten Bauteilen, nämlich einem Dichtring für den Hochdruckbereich und einer zusätzlichen Flachdichtung für den Niederdruckbereich. Die Montage mehrerer Bauteile ist immer mit zusätzlichem Aufwand verbunden. Zudem erfordert es die Abdicht-Konstruktion der DE 100 42 305 A1, dass in einem der zwei gegeneinander abzudichtenden Bauteile eine Nut zur Aufnahme des Dichtrings ausgebildet ist. Auch dies ist mit beträchtlichem Aufwand verbunden. Für den Hochdruckbereich entsteht mit diesem Dichtsystem immer nur eine einzige Dichtlinie. Als Material für den Dichtring im Hochdruckbereich wird einerseits Kunststoff, insbesondere Elastomer, oder Kautschuk und andererseits Metall vorgeschlagen. Fahrzeuge müssen in einem breiten Außentemperaturbereich eingesetzt werden. Fahrzeughersteller verlangen von ihren Zulieferern daher die Funktionsfähigkeit von Fahrzeugteilen in einem Temperaturbereich von -40° bis +140°. Kunststoffe und Kautschuke werden bei Minustemperaturen aber spröde und können unterhalb von -25°C die in der DE 100 42 305 A1 geforderte Abdichtwirkung nicht mehr erfüllen. Weiterhin erlaubt es die Abdichtungsvorrichtung nach der DE 100 42 305 A1 nicht, die Bauteile gegeneinander vorzuspannen.

Eine weitere Abdichtungsvorrichtung für einen derartigen Übergang an Hochdruckbauteilen ist aus der DE 103 10 124 A1 bekannt. Diese weist um den Hochdruckbereich ebenso wie um den Ansaugbereich Dichtsicken auf, diese Dichtsicken werden ebenso wie die Öffnung für den Zylinderkopf bzw. die an den Zylinderkopf angebrachte Buchse von einer weiteren umlaufenden Dichtsicke umgeben. Die Dichtsicken um den Hochdruckbereich ebenso wie um den Ansaugbereich sind dabei bevorzugt koaxial profiliert. Bei dieser Lösung wird relativ viel Schraubenkraft für die lange umlaufende Dichtsicke benötigt. Ebenso erfordert die profilierte Ausführung der Dichtsicke am Ansaugbereich viel Schraubenkraft. Die für die schwierigste Dichtaufgabe, nämlich den Hochdruckbereich, verbleibende Schraubenkraft wird dadurch unnötig geschmälert bzw. es wird insgesamt eine höhere Schraubenkraft benötigt. Damit eine Dichtsicke in ihrem Verlauf keine abrupten Elastizitätsveränderungen aufweist, müssen extreme Richtungsänderungen vermieden werden. Deshalb erfordert die Sickenführung um die anderen Sicken herum sehr viel Fläche, die in der Praxis aber oftmals gar nicht zur Verfügung steht. Das Hauptproblem bei der Abdichtung nach der DE 103 10 124 A1 besteht jedoch darin, dass durch die umlaufende Sicke eine zweite Dichtlinie um die Sicken für den Hochdruckbereich und den Ansaugbereich bildet. Kommt es zu Leckagen bei der Abdichtung des Hochdruckbereichs, so wird das abzudichtende Medium, üblicherweise Kraftstoff, über den Zylinderkopf abtransportiert, ohne dass dies bemerkt würde. Es ist somit nicht möglich, nach Einbau der Dichtung zu kontrollieren, ob es Leckagen im Hochdruckbereich gibt.

Es ist also Aufgabe der Erfindung, eine metallische Flachdichtung anzugeben, die aus einem einzigen Teil besteht und ohne zusätzliche Maßnahmen an den abzudichtenden Bauteilen auskommt. Die Flachdichtung soll dabei eine Abdichtung für den Hochdruckbereich aufweisen, die unabhängig von der Abdichtung des Niederdruckbereichs (Zylinderkopf bzw. Buchse und Ansaugbereich) ausgebildet ist und dadurch eine getrennte Leckagekontrolle ermöglicht. Weiter soll die Dichtung so ausgebildet sein, dass ein möglichst hoher Anteil der Schraubenkräfte auf den Hochdruckbereich einwirkt. Die Dichtung soll dabei so aufgebaut sein, dass sie eine Vorspannung der abzudichtenden Bauteile bewirkt.

Diese Aufgabe wird gelöst von einer metallischen Flachdichtung nach Anspruch 1. Bevorzugte Ausführungsformen sind in den Ansprüchen 2 bis 21 angegeben.

Zusätzlich ist es Aufgabe der Erfindung, die Verwendung einer metallischen Flachdichtung zur Abdichtung einer Pumpe gegen einen Zylinderkopf, eine Ansaugleitung und eine Hochdruckleitung anzugeben.

Diese Aufgabe wird gelöst von einer Verwendung nach Anspruch 22. Bevorzugte Ausgestaltungen sind Gegenstand der Ansprüche 23 bis 25.

Die Erfindung betrifft also eine metallische Flachdichtung zur Abdichtung einer ersten Ausnehmung für eine an einen Zylinderkopf angefügte Buchse, einer zweiten Ausnehmung für einen Ansaugkanal sowie mindestens einer dritten Ausnehmung für einen Hochdruckkanal, die darüber hinaus Öffnungen für Befestigungsmittel enthält. Anders betrachtet handelt es sich auch um ein System aus Hochdruckpumpe und diese gegen weitere Bauteile abdichtende metallische Flachdichtung und von einem noch weiteren Standpunkt aus betrachtet um ein System aus Hochdruckpumpe, metallischer Dichtung, zum Common Rail leitendem Hochdruckbereich, Ansaugleitung und Zylinderkopf, wobei letzterer üblicherweise noch eine in Richtung der Hochdruckpumpe weisende Buchse aufweist. Die Flachdichtung weist dabei eine wellenförmige Profilierung auf, die die mindestens eine dritte Ausnehmung, also den Hochdruckbereich, umgibt, Sowohl die erste Ausnehmung, also die Ausnehmung für die an den Zylinderkopf angefügte Buchse, als auch die zweite Ausnehmung, also die Ausnehmung für den Ansaugkanal, sind von einer Dichtsicke abgedichtet, die entweder beide Ausnehmungen gemeinsam oder beide getrennt umgibt. Die Dichtsicken sind dabei so geführt, dass sie keine Befestigungsmittelöffnungen umschließen. Um Leckagen im Hochdruckbereich sicher detektieren zu können und somit Kraftstoffverluste zu vermeiden, sind die wellenförmige Profilierung und die mindestens eine Dichtsicke unabhängig voneinander ausgebildet, die von ihnen abgedichteten Bereiche überlappen sich also nicht. Dadurch kann unmittelbar nach der Montage für jeden Abdichtbereich unabhängig kontrolliert werden, ob er dicht ist.

Die erfindungsgemäße metallische Flachdichtung kann aus mehreren miteinander z.B. mittels Nieten, Clinchen oder Schweißen verbundenen Metalllagen bestehen, bevorzugt besteht sie aber aus einer einzigen Metalllage. Die Metalllage ist dabei bevorzugt aus einem federharten Material gebildet, wobei die Einstellung dieser Eigenschaft auch durch Temperaturbehandlung während des Fertigungsprozesses erfolgen kann. Aus Korrosionsschutzgründen werden dabei nichtrostende Stahlsorten, insbesondere Edelstahl oder verzinkter Stahl bevorzugt. Eine Verzinkung wird im Kontext der vorliegenden Erfindung nicht als Beschichtung angesehen. Die Dicke der Metalllage liegt im Bereich von 150 bis 300 µm, bevorzugt werden 200 bis 250 µm dicke Metallbleche eingesetzt.

Die metallische Flachdichtung kann auf einer oder beiden Oberflächen, bei mehrlagigen Ausführungsformen auch auf innen liegenden Flächen, partiell beschichtet sein. Die Beschichtung ist dabei bevorzugt im Bereich der Dichtsicken und auf den daran angrenzenden Bereichen aufgebracht. Die Dichtsicken sorgen hierbei für die Makroabdichtung, die Beschichtung für die Mikroabdichtung. Es sind deshalb relativ geringe Beschichtungsdicken ausreichend. Auf einer Dichtungsoberfläche oder einer innen liegenden Fläche beträgt die Dicke der Beschichtung typischerweise 10 bis 30 µm, bevorzugt 12 bis 18 µm.

Eine Beschichtung der wellenförmigen Profilierung ist dagegen nicht bevorzugt, da hier das Risiko besteht, dass sich Beschichtungsmaterial ablöst und mit dem Medium weitergeleitet wird, im Falle einer Kraftstoffhochdruckpumpe also die Einspritzdüsen von Verbrennungskammern zu verstopfen droht. Die Kuppen bzw. Kämme der wellenförmigen Profilierung müssen daher, da sie im Betrieb starken Reibbewegungen ausgesetzt sind, unbedingt frei von jeglicher Beschichtung sein. Es ist allenfalls denkbar, dass eine sehr gut haftende Füllung in die Vertiefungen der wellenförmigen Profilierung eingebracht wird, um die Steifigkeit der Profilierung zu regulieren. Dies ist in den meisten Fällen jedoch nicht notwendig.

Als Beschichtungsmaterial kommt dafür FPM (Vinylidenfluorid-Hexafluorpropylen-Copolymer), Silicon-Kautschuk, NBR-Kautschuk (Acryl-Butadien-Kautschuk), PUR (Polyurethan), NR (Naturkautschuk), FFKM (Perfluorkautschuk), SBR (Styrolbutadienkautschuk), BR (Butylkautschuk), FVSQ (Fluorsilikon), CSM (Chlorsulfoniertes Polyethylen) sowie Silikon- bzw. Epoxidharze in Frage. Zur Verbesserung der Haftung wird dabei üblicherweise ein Primer oder eine physikalische Vorbehandlung, z.B. mittels Laser, wie in der DE 10 2004 034 824 offenbart, verwendet. Zur Anwendung als Füllung sind härtere Substanzen bevorzugt, z.B. mit Metallpartikeln o.ä. gefüllte Harze.

Die Querschnitte der wellenförmigen Profilierung können im Wesentlichen sinusförmig ausgebildet sein oder aus trapezförmigen Erhebungen und Vertiefungen gebildet sein. Auch Übergangsformen zwischen diesen beiden Formen sind möglich. Entscheidend ist, dass zwischen Erhebungen und Vertiefungen ein Flankenbereich ausgebildet ist, indem die Materialdicke gegenüber den Erhebungen und Vertiefungen reduziert ist. Durch Verpressung dieses Flankenbereichs kommt es zu einer Materialkonzentration und somit zu einer Versteifung. Die maximale Materialstärke im Bereich der Erhebungen und Vertiefungen ist mindestens 10 %, bevorzugt mindestens 13% und besonders bevorzugt mindestens 15 % größer ist als die minimale Materialstärke im Flankenbereich, jeweils senkrecht zum Materialverlauf gemessen.

Nachdem an den Kämmen der wellenförmigen Profilierung, bevorzugt im gesamten Bereich der Profilierung, auf eine Beschichtung verzichtet werden muss, wird die Mikroabdichtung zum Ausgleich der Rautiefe der abzudichtenden Bauteile (Pumpe und Zylinderkopf) dadurch erreicht, dass die Kämme auf ihren Auflageflächen in diesen Bauteilen eine plastische Verformung bewirken. Die Tiefe der Verformungen liegt dabei im Bereich der halben bis doppelten Rautiefe der Bauteile, also bei ca. 2 bis 20 µm. Die Tiefe der Verformungen hängt dabei auch vom Material des abzudichtenden Bauteils ab, aber auch vom Radius an den Kämmen der Erhebungen der Profilierung, dieser liegt üblicherweise im Bereich von 100 bis 250 µm, bevorzugt zwischen 120 und 200 µm.

Üblicherweise ist die wellenförmige Profilierung im Wesentlichen konzentrisch um die Hochdrucköffnung herum ausgebildet. Es ist dabei grundsätzlich möglich, dass die wellenförmige Profilierung um die Ausnehmung herum mäandriert, also in Schlangenlinien verläuft. Bei dieser Ausführungsform ist es ausreichend, wenn die Profilierung eine Erhebung ausbildet, die auf einer Seite aus der Ebene der Dichtungslage herausragt und dabei auf der anderen Seite eine Vertiefung bildet. Diese Ausführungsform hat allerdings den Nachteil, dass sie trotz eines relativ großen Platzbedarfs nur eine in sich geschlossene Dichtlinie ausbildet. Mehrere Dichtlinien bei gleichem oder geringerem Platzbedarf resultieren aus einer wellenförmigen Profilierung, bei der die Erhebungen und Vertiefungen konzentrisch um die Ausnehmung herum ausgebildet sind. Die Profilierung wird hierbei üblicherweise so ausgebildet, dass sie 2 bis 5 Perioden einer Welle aufweist.

In Abhängigkeit von der Konstruktion der abzudichtenden Bauteile kann der Hochdruckbereich unterschiedliche Geometrien aufweisen. Die Ausnehmung kann im Wesentlichen kreisrund sein, aber auch ovale oder ellipsoide Formen haben. Ebenso ist es nicht ausgeschlossen, dass der Hochdruckbereich aus mehreren Öffnungen besteht, die dann bevorzugt jeweils einzeln durch eine wellenförmige Profilierung abgedichtet werden. Hier kann es aus Platzgründen notwendig werden, dass ein Teil der Erhebungen und Vertiefungen im Bereich zwischen den Öffnungen ausläuft oder sich mit den Erhebungen bzw. Vertiefungen der anderen Profilierung vereinigt. Eine gemeinsame Abdichtung mittels einer einzelnen wellenförmigen Profilierung, die um alle Hochdrucköffnungen gemeinsam umläuft, ist ebenfalls denkbar.

Beim Einbau der Dichtung und Anziehen der Befestigungsmittel sorgt die wellenförmige Profilierung mit ihrer begrenzten Elastizität dafür, dass im Bereich der Profilierung die daran angrenzenden Bauteile eine Vorspannung erfahren. Dies hat zur Folge dass im Betrieb, wenn die Dichtung sich ständig ändernden Druckverhältnissen ausgesetzt ist, der Abstand zwischen Dichtung und benachbartem Bauteil sich trotz der Druckwechsel kaum mehr verändert und die Dichtung selbst nur geringe Federwege leisten muss. Hierdurch wird die Dauerhaltbarkeit entscheidend verbessert. Die wellenförmige Profilierung ist für die Abdichtung des Hochdruckbereichs vollkommen ausreichend, eine Kombination mit einer sie z.B. konzentrisch umgebenden Sicke ist daher weder notwendig noch sinnvoll. Zudem hat es sich gezeigt, dass es vorteilhaft ist, wenn die wellenförmige Profilierung sowohl in ihrem radialen als auch in ihrem Längsverlauf (d.h. entlang ihres Umfangs) gleichmäßig gestaltet ist, d.h. mit gleich bleibenden Höhen von Erhebungen und Vertiefungen, gleich bleibenden Abständen und Breiten von Erhebungen und Vertiefungen und gleich bleibenden Radien. Allenfalls bei der Breite von Erhebungen und Vertiefungen können topographische Anpassungen vorgenommen werden.

Die Niederdrucköffnungen sind dagegen keinen starken Druckschwankungen ausgesetzt, so dass eine Abdichtung mit einem elastischen Dichtelement, also einer Dichtsicke, ausreichend ist. Die Dauerhaltbarkeit der Dichtsicke ist somit auch ohne einen zusätzlichen Federwegbegrenzer (auch Stopper genannt) gewährleistet. Die mindestens eine Dichtsicke kann als Vollsicke ausgebildet werden, aus Platzgründen ist aber die Halbsickenform bevorzugt. Die Dichtsicke weist eine größere Elastizität auf als die wellenförmige Profilierung, weswegen die Sicke höher als die wellenförmige Profilierung ausgebildet wird. Die Höhe der Dichtsicke beträgt dabei 105 bis 350 %, bevorzugt 110 bis 200 % und besonders bevorzugt 115 bis 150 % der Höhe der wellenförmigen Profilierung.

Die Erfindung soll nachfolgend anhand von Zeichnungen näher erläutert werden. Diese Zeichnungen dienen ausschließlich der illustration bevorzugter Ausführungsbeispiele der Erfindung, ohne dass die Erfindung auf diese beschränkt wäre. Gleiche Teile sind in den Zeichnungen mit gleichen Bezugszeichen versehen. Es zeigen:

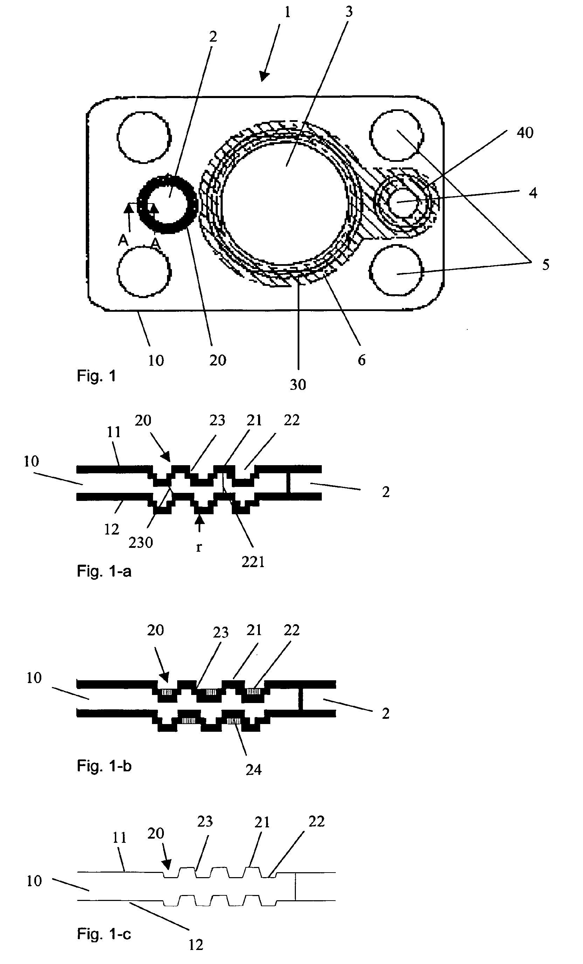

- Figur 1: eine Draufsicht auf eine erfindungsgemäße metallische Flachdichtung in einer ersten Ausführungsform;
- Figuren 1-a bis 1-c: Schnittdarstellungen entlang der Linie A-A aus Figur 1 in drei verschiedenen Ausführungsformen;
- Figur 2: eine Draufsicht auf eine erfindungsgemäße metallische Flachdichtung in einer zweiten Ausführungsform;
- Figur 3: eine Schnittdarstellung entlang der Linie B-B aus Figur 2;
- Figur 4: eine Schnittdarstellung entlang der Linie C-C aus Figur 2;
- Figuren 5 und 6: Draufsichten auf eine erfindungsgemäße metallische Flachdichtung in einer dritten bzw. vierten Ausführungsform;
- Figur 7: eine Draufsicht auf eine erfindungsgemäße metallische Flachdichtung in einer fünften Ausführungsform mit Detaildarstellungen A und B;
- Figur 8-a: eine Draufsicht auf eine erfindungsgemäße metallische Flachdichtung in einer sechsten Ausführungsform;

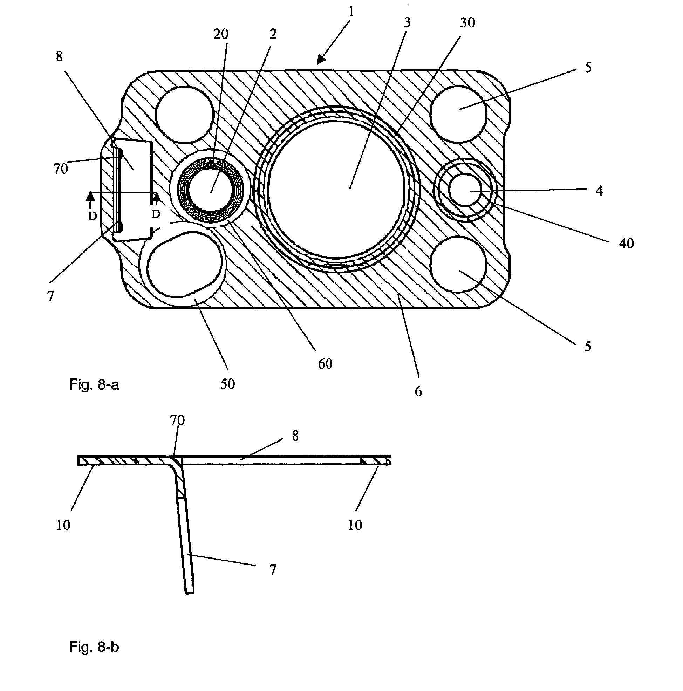

- Figur 8-b: eine Schnittdarstellung entlang der Linie D-D aus Figur 8-a und

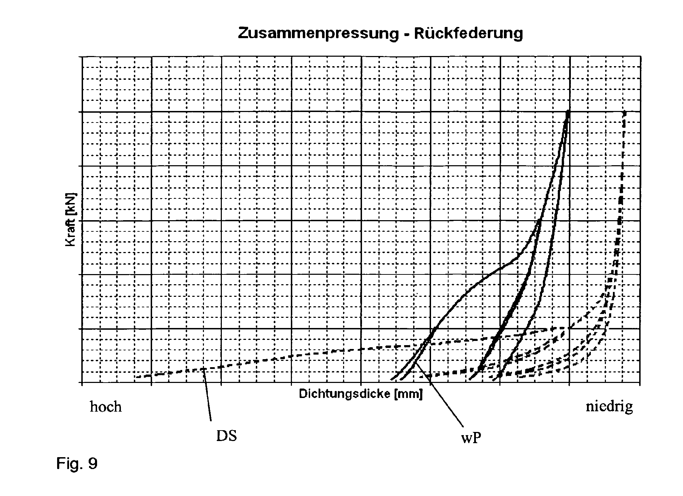

- Figur 9: den Vergleich von Federkennlinien bei der Verpressung und anschließenden Rückfederung von wellenförmiger Profilierung und Dichtsicke.

Ein erstes Ausführungsbeispiel für eine erfindungsgemäße metallische Flachdichtung 1 ist in Figur 1 dargestellt. Die Ausnehmung 2 für den Hochdruckbereich, durch den Kraftstoff zum Common Rail des Einspritzsystems transportiert wird, wird von einer wellenförmigen Profilierung 20 umgeben. In unmittelbarer Nachbarschaft liegt eine weitere Ausnehmung 3, die dafür vorgesehen ist, zwischen Zylinderkopf und Pumpe bzw. um eine am angrenzenden Zylinderkopf befestigte Buchse herum abzudichten. Auf der anderen Seite der Ausnehmung 3 schließt sich die Ausnehmung 4 an, die zur Abdichtung der Ansaugleitung dient. Die Ausnehmungen 3 und 4 umschließen jeweils nur mit niedrigem Druck beaufschlagte Bereiche und sind mit Sicken 30 bzw. 40 abgedichtet, die unabhängig voneinander ausgebildet sind. Auf den Sicken und in den sich an diese anschließenden Bereiche ist die Dichtungsoberfläche mit einer Beschichtung 6 versehen. Die Beschichtung reicht dabei unmittelbar an den Rand der Öffnungen 3 und 4 heran. Im Bereich zwischen den Ausnehmungen 2 und 3 wurde die Beschichtung 6 so aufgebracht, dass sie überall einen Mindestabstand, beispielsweise mindestens 300 µm, bevorzugt mindestens 500 µm und besonders bevorzugt mindestens 800 µm, zur wellenförmigen Profilierung 20 einhält. Die drei Fluidöffnungen 2, 3 und 4 sind von vier Öffnungen 5 für Befestigungsmittel umgeben.

Mögliche Ausführungsformen für die wellenförmige Profilierung 20 werden in den Schnitten der Figuren 1-a bis 1-c dargestellt. Die einzige Dichtungslage der Dichtung 1 zeigt in Figur 1-a auf der Oberseite zwei Erhebungen 21 und drei Vertiefungen 22, also ungefähr 2,5 Wellenperioden. Zwischen den Erhebungen 21 und den Vertiefungen 22 ist jeweils ein Flankenbereich 23 ausgebildet, in dem die Materialdicke 230 geringer ist als die Materialdicke 221 im Bereich der Erhebungen 21 und der Vertiefungen 22. Aus darstellungstechnischen Gründen erscheinen die Kämme der Erhebungen 22 zwar relativ flach, am realen Teil weisen sie jedoch einen Radius r auf, der klein sein muss, damit die wellenförmige Profilierung 6 in den benachbarten Bauteiloberflächen plastische Verformungen verursachen kann.

Während die Ausführungsform der Figur 1-a frei von jeglicher Beschichtung ist, weist diejenige der Figur 1-b eine in den Vertiefungen 22 gekammerte Füllung 24 auf, deren Höhe hier ungefähr der halben Höhe zwischen Erhebungen 21 und Vertiefungen 22 entspricht. Das Ausführungsbeispiel der Figur 1-c unterscheidet sich von denen der Figuren 1-a und 1-b einerseits durch die erhöhte Wellenperiodenzahl (3,5). Die Form der Erhebungen 21 und Vertiefungen 22 ähnelt im Vergleich zu den anderen Ausführungsbeispielen eher einer Trapezform.

Die Erhebungen 21 ragen in der Ausführungsform nach Figur 1-c über beide Oberflächen 11, 12 der Dichtungslage 1 heraus, während sie in Figuren 1-a und 1-b näherungsweise bündig mit der Oberfläche 11 abschließen und nur über die Oberfläche 12 herausragen, also unsymmetrisch ausgebildet sind. Nicht dargestellt sind Übergangsformen, bei denen der Überstand über eine Oberfläche größer oder geringer ist als der über die andere Oberfläche. Unsymmetrische Gestaltungen können insbesondere dann vorteilhaft sein, wenn die Oberflächen der abzudichtenden Bauteile unterschiedliche Eigenschaften aufweisen, damit die durch das leichte Eindringen der Kämme der Erhebungen 21 in die Bauteiloberflächenverursachten plastischen Verformungen gezielt gestaltet werden können. Auch die Radien r können in diesem Zusammenhang unterschiedlich ausgelegt werden.

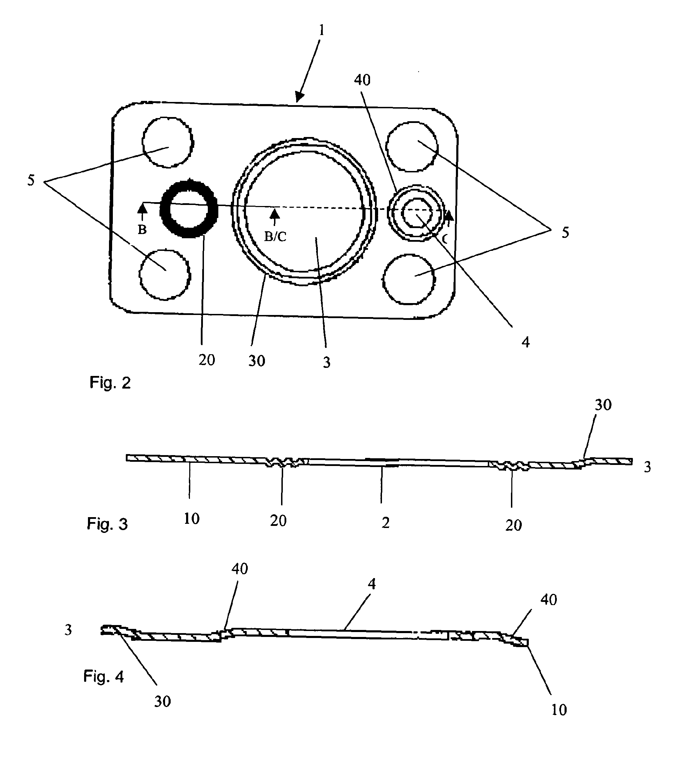

Die Ausführungsform nach Figur 2 unterscheidet sich von der nach Figur 1 dadurch, dass auf der nach oben weisenden Oberfläche keine Beschichtung vorhanden ist. Details zur Abfolge der Abdichtelemente 20, 30 und 40 sowie der Ausnehmungen 2, 3 und 4 sind in den Schnittdarstellungen in Figuren 3 und 4 illustriert. Die wellenförmige Profilierung 20 ist etwas breiter ausgeführt als der geneigte Bereich der Sicken 30 und 40. Die beiden Dichtsicken 30 und 40 sind jeweils als Halbsicken ausgeführt und weisen ähnliche Höhen und Breiten auf.

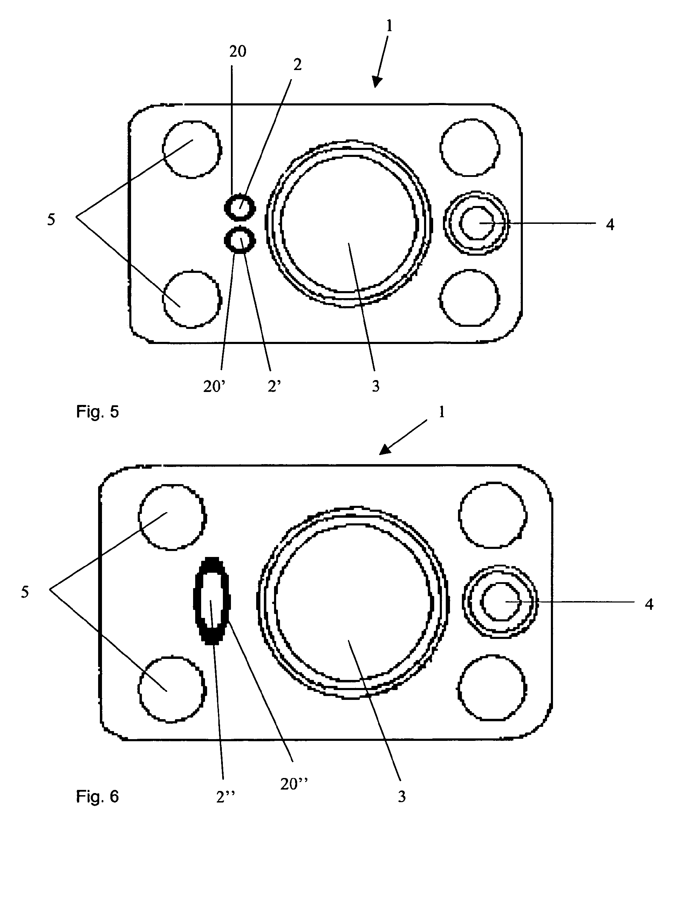

Figuren 5 und 6 stellen Ausführungsformen der erfindungsgemäßen metallischen Flachdichtung dar, die sich von denen der Figur 2 nur durch die Ausgestaltung der Ausnehmungen 2 für den Hochdruckbereich unterscheiden. Um beispielsweise zwei Hochdruckleitungen abdichten zu können weist das Ausführungsbeispiel der Figur 5 gleich zwei unmittelbar nebeneinander liegende Ausnehmungen 2 und 2' auf, die jeweils individuell von wellenförmigen Profilierungen 20 und 20' abgedichtet werden. Die ovale Hochdrucköffnung 2" in Figur 6 ist von einer ebenfalls ovalen Profilierung 20" mit wellenförmigem Querschnitt umgeben. Diese kann zur gleichzeitigen Abdichtung von mehreren durch die ovale Ausnehmung 2" verlaufenden Hochdruckleitungen verwendet werden oder aber - wobei dies nur selten der Fall sein wird - eine Leitung mit ovalem Querschnitt abdichten.

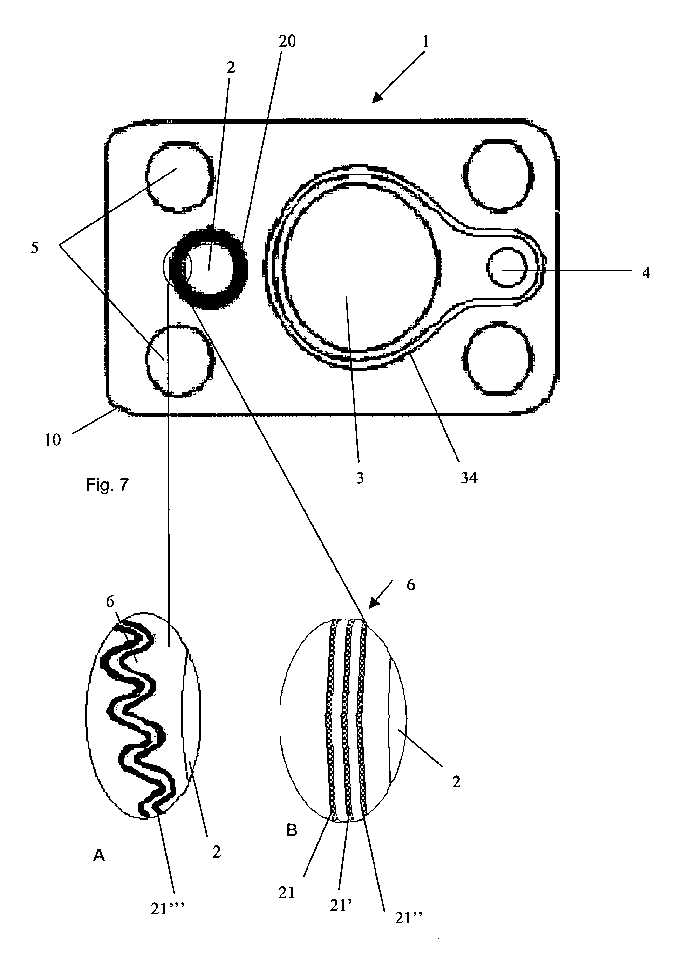

Figur 7 demonstriert, dass die Öffnungen 3 und 4 des Niederdruckbereichs auch mittels einer gemeinsamen Sicke 34 abgedichtet werden können. Die Detailausschnitte A und B zeigen, dass die wellenförmige Profilierung 6 einerseits aus einer größeren Anzahl Erhebungen und Vertiefungen, die im wesentlichen konzentrisch zu abzudichtenden Öffnung 2 verlaufen bestehen kann, wie dies anhand der drei näherungsweise parallel verlaufenden Erhebungen 21, 21' und 21" im Ausschnitt B gezeigt ist. Andererseits kann die Profilierung 6 auch aus nur einer einzigen Erhebung 21''' bestehen, die dann aber entlang des Randes der abzudichtenden Öffnung 2 mäandriert und ihre Stabilität und gegenüber einer Sicke reduzierte Elastizität durch von ihren sich schlängelnden Verlauf, insbesondere die regelmäßige Ausdehnung in zur Öffnung 2 radialer Richtung erhält.

In den Figuren 8-a und 8-b ist schließlich noch gezeigt, wie in der Lage 10 der metallischen Flachdichtung 1 ein Montageelement 7 ausgebildet ist, das an drei Seiten aus der Dichtungslage 10 freigeschnitten ist und mit der verbleibenden Seite zumindest entlang der Linie 70 mit der Lage 10 verbunden bleibt. Das Montageelement 7 ist an der Linie 70 aus der Lage 10 herausgebogen, und bildet dadurch einen Widerhaken, der insbesondere bei der Vormontage der Dichtung hilfreich ist. Durch das Herausbiegen des Hakens 7 bildet sich in der metallischen Flachdichtung 1 eine zusätzliche Öffnung 8.

Figur 8-a zeigt weiterhin, dass es prinzipiell möglich ist, auch Befestigungsmittelöffnungen 5 von sickenähnlichen umlaufenden Kröpfungen zu umgeben. Zudem wird deutlich, dass die Außenkontur der metallischen Flachdichtung nicht notwendigerweise einem Rechteck mit abgerundeten Ecken entsprechen muss, wie dies in den anderen Ausführungsbeispielen der Fall war. Rück- und Vorsprünge der Außenkontur ergeben sich meist aus der äußeren Gestalt der abzudichtenden Bauteile.

In Figur 9 ist das Verpressungs- und Rückfederungsverhalten der beiden geprägten Dichtelemente von Hochdruckbereich einerseits und Niederdruckbereich andererseits, also wellenförmiger Profilierung und Dichtsicke dargestellt. Beispielhaft wurde eine wellenförmige Profilierung mit mehreren konzentrisch zur Öffnung angeordneten Erhebungen und Vertiefungen mit einer beidseitig mit einer Beschichtung versehenen Halbsicke verglichen. Die Messungen erfolgen dabei immer unter Vorlast. Die gestrichelte Linie DS stellt den Federweg der Dichtsicke dar. Sie verläuft relativ flach, während die durchgezogene Linie wP der wellenförmigen Profilierung wesentlich steiler verläuft. Dies zeigt, dass die Dichtsicke wesentlich elastischer ist als die wellenförmige Profilierung. Der Federweg der Dichtsicke ist bei gleicher Kraftaufgabe wesentlich größer als der der wellenförmigen Profilierung, er beträgt immer ein Mehrfaches des Federweges der wellenförmigen Profilierung, teilweise mehr als das 10fache. Unter Berücksichtigung der verschiedenen Gestaltungsmöglichkeiten für die Dichtsicke und die wellenförmige Profilierung kann man deshalb davon ausgehen, dass selbst bei Kombination einer sehr steifen Dichtsicke mit einer sehr elastischen wellenförmigen Profilierung der Federweg der Dichtsicke mindestens dem 3,5 fachen, bevorzugt mindestens dem 5 fachen des Federwegs der wellenförmigen Profilierung beträgt, wobei die Höhen von Dichtsicke und wellenförmiger Profilierung so gestaltet sind, dass ihr Verhältnis im im Abschnitt [0019] angegebenen Bereich liegt.

Weiter zeigt Figur 9, dass die Dichtsicke mit ihren weit in Richtung höherer Dicken weisenden absteigenden Ästen nur vernachlässigbar kleinen plastischen Verformungen unterliegt und die plastische Verformung der wellenförmige Profilierung zwar höher ist als die der Dichtsicke, insgesamt aber auch sehr begrenzt ist. Insgesamt folgt aus Figur 9, dass die Dichtsicke eine deutlich geringere Dichtkraft besitzt als die wellenförmige Profilierung.

## Patentansprüche

1. Metallische Flachdichtung (1) mit
- einer ersten Ausnehmung (3) für eine an einem Zylinderkopf befestigte Buchse,
- einer zweiten Ausnehmung (4) für einen Ansaugkanal,
- mindestens einer dritten Ausnehmung (2) für einen Hochdruckkanal,
- sowie weiteren Öffnungen (5) für Befestigungsmittel,
wobei die Flachdichtung
eine wellenförmige Profilierung (20) aufweist, die die mindestens eine dritte Ausnehmung (2) umgibt,
eine Dichtsicke (30, 34) aufweist, die mindestens die erste Ausnehmung (3) umgibt und eine Dichtsicke (40, 34) aufweist, die zumindest die zweite Ausnehmung (4) umgibt,
**dadurch gekennzeichnet, dass** der von der wellenförmigen Profilierung (20) umgebene Bereich und der von Dichtsicken (30, 40, 34) umgebene Bereich sich nicht überlappen und die Dichtsicken (30, 40, 34) keine Öffnungen (5) für Befestigungsmittel umschließen.

2. Metallische Flachdichtung nach Anspruch 1,
**dadurch gekennzeichnet,**
**dass** sie genau eine Lage (10) aufweist.

3. Metallische Flachdichtung nach Anspruch 1 oder 2,
**dadurch gekennzeichnet, dass**
die metallische Flachdichtung (1) auf mindestens einer Oberfläche (11, 12) partiell eine Beschichtung (6) aufweist.

4. Metallische Flachdichtung nach Anspruch 3,
**dadurch gekennzeichnet, dass**
die metallische Flachdichtung (1) eine Beschichtung (6) im Bereich der Dichtsicken und in an diese angrenzenden Bereichen aufweist.

5. Metallische Flachdichtung nach einem der Ansprüche 3 oder 4,
**dadurch gekennzeichnet, dass** die Dicke der Beschichtung (6) auf einer Dichtungsoberfläche (11, 12) zwischen 2,5 % und 15 % der Dicke des Blechs der beschichteten Lage (10) aufweist.

6. Metallische Flachdichtung nach einem der Ansprüche 3 bis 5,
**dadurch gekennzeichnet, dass**
die wellenförmige Profilierung (20) im Bereich ihrer Vertiefungen (22) eine Füllung (24) und/oder Beschichtung (6) aufweist, die Kämme ihrer Erhebungen (21) aber weder eine Füllung (24) noch eine Beschichtung (6) aufweisen.

7. Metallische Flachdichtung nach einem der Ansprüche 3 bis 5,
**dadurch gekennzeichnet, dass**
die wellenförmige Profilierung (20) weder beschichtet noch gefüllt ist.

8. Metallische Flachdichtung nach einem der vorhergehenden Ansprüche,
**dadurch gekennzeichnet, dass**
der Querschnitt der wellenförmigen Profilierung (20) sinusförmig ist oder aus trapezförmigen Erhebungen und Vertiefungen besteht oder eine Übergangsform zwischen Sinusform und Trapezform darstellt.

9. Metallische Flachdichtung nach einem der vorhergehenden Ansprüche,
**dadurch gekennzeichnet, dass**
die wellenförmige Profilierung (20) Erhebungen (21), Vertiefungen (22) und Flankenbereiche (23) zwischen Erhebungen (21) und Vertiefungen (22) aufweist, wobei Materialstärke (230) der Flankenbereiche (23) geringer ist als die Materialstärke (221) der Erhebungen (21) und Vertiefungen (22).

10. Metallische Flachdichtung nach Anspruch 9,
**dadurch gekennzeichnet, dass**
die maximale Materialstärke (221) im Bereich der Erhebungen (21) und Vertiefungen (22) mindestens 10 %, bevorzugt mindestens 13 % und besonders bevorzugt mindestens 15 % größer ist als die minimale Materialstärke (230) im Flankenbereich (23).

11. Metallische Flachdichtung nach einem der vorhergehenden Ansprüche,
**dadurch gekennzeichnet, dass** die Erhebungen (21) einen Radius r von 100 bis 250 µm, bevorzugt 120 bis 200 µm aufweisen.

12. Metallische Flachdichtung nach einem der vorhergehenden Ansprüche,
**dadurch gekennzeichnet, dass**
die Erhebungen (21) und Vertiefungen (22) der wellenförmigen Profilierung (20) konzentrisch zur mindestens einen dritten Ausnehmung (2) verlaufen.

13. Metallische Flachdichtung nach Anspruch 12,
**dadurch gekennzeichnet, dass**
die wellenförmige Profilierung (20) zwei bis fünf Perioden einer Welle aufweist.

14. Metallische Flachdichtung nach einem der Ansprüche 1 bis 13,
**dadurch gekennzeichnet, dass**
die Erhebungen und Vertiefungen der wellenförmigen Profilierung (22) mäandrierend oder schlangenförmig um die mindestens eine dritte Ausnehmung (2) umlaufen.

15. Metallische Flachdichtung nach Anspruch 14,
**dadurch gekennzeichnet, dass**
die wellenförmige Profilierung (20) mindestens eine Erhebung (21) oder Vertiefung (22) aufweist.

16. Metallische Flachdichtung nach einem der vorhergehenden Ansprüche,
**dadurch gekennzeichnet, dass**
die erste und zweite Ausnehmung (3, 4) gemeinsam von genau einer Dichtsicke (34) umgeben werden.

17. Metallische Flachdichtung nach einem der Ansprüche 1 bis 15,
**dadurch gekennzeichnet, das**
die erste und die zweite Ausnehmung (3, 4) von voneinander unabhängigen Dichtsicken (30, 40) umgeben werden.

18. Metallische Flachdichtung nach einem der vorhergehenden Ansprüche,
**dadurch gekennzeichnet, dass**
die Höhe der mindestens einen Dichtsicke (30, 40, 34) 105 bis 350 %, bevorzugt 110 bis 200 % und besonders bevorzugt 115 bis 150 % der Höhe der wellenförmigen Profilierung (20) beträgt.

19. Metallische Flachdichtung nach einem der vorhergehenden Ansprüche,
**dadurch gekennzeichnet, dass**
die metallische Flachdichtung (1) zusätzlich zu den Durchgangsöffnungen (5) für Befestigungsmittel mindestens ein Montageelement (7) enthält, wobei das Montageelement (7) integral in der mindestens einen Lage (10) der Flachdichtung (1) ausgebildet ist.

20. Metallische Flachdichtung nach einem der vorhergehenden Ansprüche,
**dadurch gekennzeichnet, dass**
die mindestens eine metallische Lage (10) aus Federstahl, insbesondere aus einem federharten Edelstahl, gebildet ist.

21. Metallische Flachdichtung nach einem der vorhergehenden Ansprüche,
**dadurch gekennzeichnet, dass**
der Federweg der Dichtsicke bei gleicher Kraftaufbringung mindestens dem 3,5 fachen, bevorzugt mindestens dem 5 fachen des Federweges der wellenförmigen Profilierung entspricht.

22. Verwendung einer metallischen Flachdichtung (1) nach einem der vorhergehenden Ansprüche zur Abdichtung einer Pumpe gegen einen Zylinderkopf, eine Ansaugleitung und eine Hochdruckleitung.

23. Verwendung nach Anspruch 22,
**dadurch gekennzeichnet, dass** der im Betrieb abzudichtende Druck der Hochdruckleitung > 130 MPa, insbesondere > 160 MPa beträgt und der abzudichtende Druck der Ansaugleitung und des Zylinderkopfes ≤ 1,5 MPa, insbesondere ≤ 1 MPa beträgt.

24. Verwendung nach einem der Ansprüche 22 oder 23,
**dadurch gekennzeichnet, dass**
die wellenförmige Profilierung (20) in der Gegenfläche von mindestens einem der angrenzenden Bauteile zu einer plastischen Verformung führt.

25. Verwendung nach Anspruch 24,
**dadurch gekennzeichnet, dass**
die plastische Verformung eine Tiefe von 2 bis 20 µm aufweist.
